# EUROPEAN PATENT SPECIFICATION

(11) **EP 4 380 996 B1**
(45) Date of publication and mention of the grant of the patent: **02.07.2025**
(21) Application number: 22758519.7
(22) Date of filing: 01.08.2022
(51) Int. Cl.: C08G 63/199, C08G 63/672, C08G 63/78, C08G 63/91, C08G 63/181

(54) **PROCESS FOR THE PRODUCTION OF POLYESTER COPOLYMERS**
VERFAHREN ZUR HERSTELLUNG VON POLYESTERCOPOLYMEREN
PROCÉDÉ DE PRODUCTION DE COPOLYMÈRES DE POLYESTER

(30) Priority: 02.08.2021 EP 21189198
(43) Date of publication of application: 12.06.2024
(73) Proprietor: Avantium Knowledge Centre B.V., 1014 BV Amsterdam (NL)
(72) Inventor: WANG, Bing, 1014 BV Amsterdam (NL); GRUTER, Gerardus Johannes Maria, 1014 BV Amsterdam (NL); VAN PUTTEN, Robert-Jan, 1014 BV Amsterdam (NL)
(74) Representative: Avantium Intellectual Property
(86) International application number: PCT/EP2022/071578
(87) International publication number: WO 2023/012117

(56) References cited:
- WO-A1-2020/106511
- US-A1- 2011 071 235
- US-A1- 2020 308 396

## Description

### FIELD OF THE INVENTION

The invention relates to a polymerization process for the production of a polyester copolymer comprising reacting a polyester with one or more diols and one or more dicarboxylic acids or esters thereof, a novel polyester copolymer obtainable by said method, a composition comprising said novel polyester copolymer and an article comprising said polyester copolymer.

### BACKGROUND OF THE INVENTION

Polyethyleneterephthalate (PET) is an important polymer material and currently is the second largest in volume of the 'big 5' plastics, with a global annual production of around 80 million tons [www.textileworld.com/textile-world/features/2019/07/challenges-facing-recycled-polyester/]. The most common PET applications are fibres (textiles; 56 million tons/yr) and single-use packaging such as bottles (20 million tons/yr), engineering plastics and films. The rapid development of the PET industry globally has led to an increase of PET waste. A lot of pollution, especially in the oceans, is caused by PET waste. As a consequence, there is a need for recycling and reuse of waste PET products which will not only reduce consumption of fossil raw materials, but also will have a positive impact on the environment. Creating a recyclable renewable industry is of great significance to the sustainable development of polyester materials. However, because of the purity requirements, today only about 3% of all PET (2 million tons per year) is closed-loop mechanically recycled, producing rPET (recycled PET) for bottles. The remaining 78 million tons of PET waste is landfilled, open-loop recycled (down cycled - e.g. bottle-to-fibre), incinerated, at best with energy recovery, or ends up in nature. This is estimated to be at least 8 million tons mixed plastic waste per year (World Economic Forum, Ellen MacArthur Foundation and McKinsey & Company, The New Plastics Economy - Rethinking the future of plastics [2016, http: // www.ellenmacarthurfoundation.org/publications]).

There is still a need for the use of PET waste material in new, economically interesting processes, particularly with the aim to produce attractive higher value derivatives of PET, particularly with higher molecular weights and high glass transition temperatures (Tg), thus for "upcycling" the PET material. By effectively using waste plastics as a preferred resource for the production of new plastics, a serious contribution can be made to a required acceleration of the transition from a linear plastics use to a truly circular use of plastics in 2050.

Unfortunately, the cost of the mechanical recycling process makes recycled PET (or rPET) more expensive than so-called "virgin" (i.e. newly produced) PET. Several chemical recycling technologies are currently in development such as Cure [https://curetechnology.com/] and loniqa [https://ioniqa.com/] in the Netherlands, in which PET is depolymerized to oligomers or to its monomers, allowing "cleaning" and also resulting in closed-loop recycling. However, the resulting chemically recycled rPET is still more expensive than virgin fossil PET. In addition, there are various other new PET recycling initiatives e.g. by companies such as Carbios, GR3N, Loop Industries and Resinate Materials Group, which however only target improving the recycling process and lowering recycling cost.

Chemical recycling of PET needs further exploring. Polyesters like PET are uniquely positioned for the chemical recycling/upcycling approach as ester bonds can be hydrolysed (with water, back to the original acid and alcohol) or trans-esterified (typically with alcohols, back to esters of the original acid and alcohol) or trans-esterified with other monomers) to produce copolyesters. An advantage of a chemical recycling approach is that ester bonds already present in the waste PET are used, thus conserving the energy invested in their production (high temperatures and low pressures are required to remove condensation products such as water and methanol and to remove excess diol).

The re-use of PET is of particular interest if the material is upgraded by introduction of, preferably more sustainable, additional monomer units. An interesting class of PET copolymers with additional monomer units are PEXT copolymers, wherein X is a monomer derived from cyclic or bicyclic (secondary) diols. Such copolymers have improved properties, like higher rigidity and thermal stability, introduced by said diols. For example, CHDM (cyclohexanedimethanol) or TMCD (tetramethylcyclobutanediol) are specialty diols used in such copolymers. Further, polyethylene terephthalate containing isosorbide (PEIT) polymers are desirable, as isosorbide is produced from renewable sources. PEIT copolymers are known to exhibit a wide range of glass transition temperatures (as from 80 up to 180°C) and are therefore suitable for use in many applications (see e.g. Polymer Engineering and Science, March 2009, 49(3):544 - 553). The problem however with isosorbide is that it carries two secondary alcohol functionalities, that generally react only very slowly, especially when compared to highly reactive primary alcohol functionalities, such as present in ethylene glycol. As a consequence, until now it has proven very difficult to produce PEIT copolymers with high isosorbide content and high molecular weight.

Recently, CN112608454 reported a process for preparing a non-crystalline copolyester PETG by using waste PET plastics. PETG is an amorphous copolyester material produced by introducing monomer fragments (here G) that effectively control crystallinity in the molecular structure of PET. The monomer fragment G in the CN112608454 disclosure is derived from (a mixture of) the so-called "modified" glycols cis 1,4-cyclohexanedimethanol, trans 1,4-cyclohexanedimethanol, and neopentyl glycol. The process of CN112608454 starts with simultaneously slurrying waste PET (as raw starting material) and ethylene glycol with terephthalic acid, or terephthalate, or a mixture of terephthalic acid and terephthalate, together with the so-called "modified" glycols, catalysts and stabilizers, optionally in the presence of additional diacids and "other" glycols, followed by a degradation / esterification reaction at high temperature, to end with a vacuum polymerization, to generate a low molecular weight polyester (according to the authors of CN112608454). Isosorbide is mentioned in CN112608454 as an optional additional "other" glycol, which is used in only limited amounts, if it is used at all.

In another disclosure, EP2499183B1, in an effort to recycle used PET material and to use renewable materials, the glycolysis of PET with a dianhydrohexitol (such as isosorbide) is described as a step in a process to produce a polyester that is hydroxyl-functional or carboxyl-functional, having a number average molecular weight, as measured by gel permeation chromatography, of from 400 to 15000 daltons. According to the process of EP2499183B1, chain extension may be achieved in further steps, e.g. by reacting the previously obtained hydroxyl-functional prepolymer with one or more diacids.

US2020/0308396 discloses an amorphous polyester or copolyester composition comprising the reaction product of a crystalline or semicrystalline polyester or copolyester, optionally derived from a recycled waste stream, at least one diol or aromatic diacid or an ester of a diacid or a hydroxycarboxylic acid or a lactone or a dianhydride, and a catalyst, wherein the amorphous composition has a weight average molecular weight of at least 10,000 g/mol (polystyrene equivalent molecular weight) as measured by gel permeation chromatography.

It is notable, that although in the prior art step-growth polymerization techniques already have been used for the production of isosorbide-based PET polymers, challenges encountered with the low reactivity of secondary hydroxyl groups, like those present in isosorbide, have given rise to the need for development of new synthetic strategies. This is particularly of interest when (co)polyesters with high isosorbide content (e.g. 20-50 mol%) with associated high glass transition temperature and certain properties like high molecular weight (Mn > 20,000) are desired. For example, currently PEIT is a commercial product but due to difficulties with producing PEIT with such properties/specifications, PEIT's production volume is still relatively small. US 2011/071235 A1 relates to biodegradable aliphatic-aromatic copolyesters, combinations thereof with other polymers, and methods of manufacture of the copolyesters and compositions. The obtained polyester copolymer has a number average molecular weight of at least 20,000 Daltons and a polydispersity index from 2-6.

It would be advantageous to provide a chemical PET recycling/upcyling process to produce copolymers with a high content of monomers derived from (bi)cyclic secondary diols, in which preferably sustainable monomers are introduced into (r)PET, to produce new copolyesters with improved properties, such as improved mechanical, thermal, gas barrier, and/or caustic resistance and/or biodegradability properties compared to PET. Further, it would be an advancement to be able to produce a huge variety of polyester copolymers with tunable properties, which may be suitable for specific targeted applications.

### SUMMARY OF THE INVENTION

Accordingly, the present invention provides a polymerization process for the production of a polyester copolymer **A** comprising simultaneously reacting a polyester (i) with one or more diols (ii) and one or more (hetero)aromatic dicarboxylic acids or any esters thereof (iii), wherein the polyester (i) is polyethylene terephthalate, polyethylene furanoate or polyethylene terephthalate-co-furanoate; and wherein no ethylene glycol is added as a diol (ii); and wherein at least one of the one or more diols (ii) is selected from (bi)cyclic secondary diols; and wherein the components (i) and (ii) are used in sufficient quantities to produce a polyester copolymer **A** comprising at least 40 mole % of ethylene glycol derived from the starting polyethylene terephthalate, polyethylene furanoate or or polyethylene terephthalate-co-furanoate, and at least 5 mole %, preferably equal to or more than 10 mole %, of monomers derived from said (bi)cyclic secondary diol(s), the percentages based on the total amount of diol-derived monomer units in polyester copolymer **A;** and wherein the process comprises heating the mixture of polyester (i), the one or more diols (ii) and the one or more (hetero)aromatic dicarboxylic acids or any esters thereof (iii) to form a melt, comprising the steps (a) to (d): (a) in a reaction vessel heating the polyester (i), the one or more diols (ii) and the one or more (hetero)aromatic dicarboxylic acids or any esters thereof (iii) to a certain temperature high enough to form a slurry/melt (i.e. a state in which the viscosity is low enough for the mixture to be stirred effectively), so that the reaction mixture has a temperature from at least 220°C to 260 °C, for a certain period of time until a clear melt forms, specifically being 120 to 250 minutes, at atmospheric pressure to 5 bar; (b) continuing the esterification/ transesterification reaction for a period of 60 to 100 minutes while gradually increasing the temperature of the reaction mixture to a temperature not higher than 270 °C (and at the same time removing condensation products) and gradually reducing the pressure to atmospheric pressure (in case the pressure in step (a) was higher than atmospheric pressure); (c) while starting at the same temperature as the temperature of step (b), treating the product resulting from step (b) with a pressure gradually reducing to lower than 20 mbar, preferably lower than 10 mbar, and more preferably lower than 5 mbar, even more preferably equal to or lower than 1 mbar, with continued stirring for a 60 to 240 minutes; and optionally at the end of step (c), in order to easily discharge the polyester, further increasing the temperature by 0.1 °C to 50 °C to a temperature not higher than 285 °C; and (d) discharge the polyester at a pressure of 1 to 5 bar; and to generate a polyester **A** comprising monomer units derived from the polyester (i), the one or more diols (ii) and the one or more (hetero)aromatic dicarboxylic acids or any esters thereof (iii), having a number average molecular weight (Mn), as measured by gel permeation chromatography with PMMA standards as reference material, of 16500 daltons or more, and having a polydispersity index in the range from equal to or higher than 1.6 to equal to or lower than 2.6.

Contrary to several PET recycling/degradation processes known in the art, in the current process no ethylene glycol is added for the (initial) degradation of the PET polymeric chain. Surprisingly, it was found that when PET, terephthalic acid and the at least one (bi)cyclic secondary diol are reacted together in a so-called "one-pot" reaction, (either batch or continuous) simultaneous degradation/transesterification takes place, resulting in a polyester copolymer that comprises significant quantities of monomer units derived from said (bi)cyclic secondary diol. In particular, when said secondary diol is isosorbide, surprisingly high content of the isosorbide-derived monomer may be found in the polyester copolymer product. Advantageously, according to the process of the invention, the diacid (required to match the one to one diol to diacid ratio) is already present from the start of the reaction, allowing an efficient, concerted, "one-in-all", process. No multiple step polymerization is needed to allow the introduction of the diacid, as opposed to for example EP2499183B1.

As a further advantage over prior art processes, the process of the present invention allows for the preparation of PET-derived polyester copolymers with tunable properties, comprising monomer units derived from renewable materials, while obtaining high number average molecular weights of the polyester end product.

Advantageously, the novel process further opens possibilities for the convenient production of (upcycled) PET-derived polyester copolymers, in particular of copolymers comprising monomers derived from rigid sterically constrained (bi)cyclic secondary diols, and most preferably monomers derived from isosorbide.

The present invention provides an advantageous process for the preparation of both existing and, in particular, novel polyester copolymers. Said polyester copolymers according to the invention can advantageously be used in a broad range of (industrial) applications, such as in films, fibres, injection (blow) moulded parts and bottles and packaging materials.

In addition, the invention provides a composition comprising any one of said novel polyester copolymers **A** and in addition one or more additives and/or one or more additional polymers.

Further, the invention provides an article comprising the polyester copolymer **A** according to the present invention or a composition comprising said polyester copolymer **A** and one or more additives and/or additional polymers.

### DETAILED DESCRIPTION OF THE INVENTION

The present invention relates to a polymerization process for the production of a polyester copolymer. By a "polyester" herein is understood a polymer comprising a plurality of monomer units linked via ester functional groups in its main chain. An ester functional group can be formed by reacting an hydroxyl group (-OH) with a carboxyl/carboxylic acid group (-C(=O)OH). Typically, a polyester is a synthetic polymer formed by the reaction of one or more bifunctional carboxylic acids with one or more bifunctional hydroxyl compounds. By a polyester copolymer is herein understood a polyester wherein three or more types of monomer units are joined in the same polymer main chain.

By a "monomer unit" is herein understood a unit as included in the polyester copolymer, which unit can be obtained after polymerization of a monomer, that is, a "monomer unit" is a constitutional unit contributed by a single monomer or monomer compound to the structure of the polymer, herein the smallest diol or di-acid repeating unit. By a "monomer" or "monomer compound" is herein understood the smallest diol or di-acid compound used as the starting compound to be polymerized.

The polymerization process according to the invention comprises heating the polyester (i), the one or more diols (ii) and the one or more (hetero)aromatic dicarboxylic acids or any esters thereof (iii) to form a melt, which means melt mixing of the materials, i.e. heating all materials in the reaction mixture until they are all in a molten state, as a clear liquid. Optionally, a metal-containing catalyst is added to the reaction mixture. The melt mixing of the reagents (i), (ii) and (iii), is typically done at a temperature of the reaction mixture in the range from equal to or higher than 220 °C, preferably equal to or higher than 230°C, to equal to or lower than 275°C,preferably equal to or lower than 260°C, and suitably equal to or lower than 250°C. The melt mixing can be carried out, e.g. batch-wise, in a reactor. The melt mixing may be preceded by an introduction stage, wherein the reagents are introduced into a reactor, and the melt mixing is succeeded by an esterification/transesterification stage, followed by a polycondensation stage, each step being performed at appropriate temperatures and pressures, until a polyester copolymer with the desired molecular weight of Mn >16500 dalton and a polydispersity index in the desired range from equal to or higher than 1.6 to equal to or lower than 2.6 is obtained, and further a recovery stage may follow, wherein the polyester copolymer is recovered from a reactor. The melt polymerization process of the present disclosure may also be carried out in a continuous process.

In the currently claimed process, no ethylene glycol is added as a diol (ii). All ethylene glycol-derived monomer units in the produced polyester copolymer **A** are therefore derived from the starting polyester (i), which already comprises ethylene glycol-derived monomer units.

According to the process of the invention, at least one of the one or more diols (ii) is selected from isosorbide, and in addition also other diols (ii) may be used. A large range of diols may be selected, depending on the desired properties of the produced polyester copolymer **A.** The type and amounts of the different monomer units in the copolymer may for instance impact the thermal properties and the crystallinity, but also barrier, mechanical and other properties. For example, the glass transition temperature Tg of the produced polyester copolymer **A** may be targeted to a desired value by tuning the amount of the different monomer units.

Thus, conveniently several properties, like the Tg, of the produced polyester copolymer can be targeted to a desired value by tuning selection of the type and amount of one or more diols (ii) during the process, but also by tuning selection of the type and amount of the one or more (hetero)aromatic dicarboxylic acids or any esters thereof (iii). According to the process of this disclosure, polyester copolymers with a commercially interesting number average molecular weight may be obtained within commercially advantageous reaction times.

As stated above, the selection of the type and amount of the one or more diols (ii) in the process influences the eventual Tg. When high Tg's are targeted, in addition to the isosorbide , optionally a further diol (ii) is selected, preferably selected from (rigid) diols such as 1,2-propanediol, 2,3-butanediol, neopentylglycol, cyclohexanedimethanol, 2,3:4,5-di-O-methylene-galactitol and 2,4:3,5-di-O-methylene-D-mannitol. In particular, cyclohexanedimethanol is a preferred further diol (ii) for improving impact strength of the polyester copolymer.

Especially when high Tg's are targeted, preferably polyester copolymer **A** generated by the process comprises monomer units derived from isosorbide in at least 10 mole %, preferably 20-30 mole %, suitably 30-40 mole %, up to 60 mole %, the percentage based on the total amount of diol-derived monomer units in polyester copolymer **A.**

As said, also the type and amount of the (iii) one or more (hetero)aromatic dicarboxylic acids or any esters thereof will have a tuning effect on the properties of the produced polyester copolymer A.

In a particularly preferred embodiment of process of the invention, the one or more diols (ii) and the one or more(hetero)aromatic dicarboxylic acids or any esters thereof (iii) are used in the process in a molar ratio of the total sum of diols to the total sum of dicarboxylic acids or any esters thereof of 1.5 : 1.0 to 1.0 : 1.0, and wherein preferably the one or more diols (ii) is isosorbide and the one or more (hetero)aromatic dicarboxylic acids or any esters thereof (iii) is terephthalic acid and/or furan dicarboxylic acid.

When the properties of the polyester copolymer are targeted towards a (relatively) high glass transition temperature in the range from equal to or higher than 100°C to less than 160°C, preferably equal to or less than 140°C, the polyester copolymer can be very suitable for use in applications where a product, such as for example a film, fibre, injection moulded part or packaging material, needs to be heat-resistant, for example in the case of hot filling applications, coffee cups, microwave applications and certain medical applications. On the other hand, when the polyester copolymer is targeted towards a (relatively) low glass transition temperature in the range from equal to or more than 60°C to equal to or less than 100°C, the polyester copolymer can be very suitable for use in applications where a product needs to remain resilient at low temperatures and/or needs to be able to withstand cold without breaking or becoming too brittle, for example in the case of outdoor furniture. When the polyester copolymer is targeted towards a glass transition temperature in the range from equal to or more than 60°C to equal to or less than 120°C or equal to or less than 100°C, the polyester copolymer can be very suitable for the replacement of poly(ethylene terephthalate) (PET) in applications such as bottles and/or containers.

Preferably, the diols and/or diacids used in the current process are obtained and/or derived from a renewable source, e.g. sustainable biomass material. By a biomass material is herein understood a composition of matter obtained and/or derived from a biological source as opposed to a composition of matter obtained and/or derived from petroleum, natural gas or coal. The biomass material can for example be a polysaccharide, such as starch, or a cellulosic and/or lignocellulosic material. By sustainable is herein understood that the material is harvested and/or obtained in a manner such that the environment is not depleted or permanently damaged. Sustainable biomass material may for example be sourced from forest waste, agricultural waste, waste paper and/or sugar processing residues. Isosorbide, isomannide and isoidide can be suitably obtained by dehydrating respectively sorbitol, mannitol and iditol. The synthesis of these 1,4:3,6-dianhydrohexitols *per se* is well known in the art.

In a preferred embodiment of the process of the invention, the polyester (i) is polyethylene terephthalate (PET). This means that the polyester is essentially PET with optionally only traces of other compounds. The polyester (i) used as starting material in the process may be provided in the form of a material comprising said polyester (i), especially with a consistent high quality of the polyester. The material advantageously is a waste material. Preferably, the material comprising PET is predominantly waste PET, in particular PET scrap. To avoid any misunderstanding, also non-waste PET (i.e. virgin PET) may also be used instead of waste PET.

In another preferred embodiment of the invention, the polyester (i) is polyethylene furanoate (PEF) instead of or in combination with polyethylene terephthalate. In case the polyester is PEF, this means that the polyester is essentially PEF with optionally only traces of other compounds. PEF is an aromatic polyester made of ethylene glycol and 2,5-furandicarboxylic acid and may be considered as an analogue of polyethylene terephthalate (PET). PEF may be a fully biobased material, and offers in addition to better carbon footprint, superior barrier, mechanical and thermal properties when compared to PET. PEF is an ideal material for a wide range of applications such as in the packaging industry for alcoholic beverages, fruit juices, milk, soft drinks, fresh tea or water. Like PET, PEF may be available in the form of "virgin" and "recycled" material. When PEF is abundantly available, preferably, the polyester (i) may be material comprising predominantly waste PEF, in particular PEF scrap.

Generally, the Mn of the starting PET or PEF is at least 10000 daltons.

In the process of the invention, it is also possible that the polyester (i) comprises PEF in combination with PET. In such a case, a combination of at least 95% by weight of PET and at most 5% by weight of PEF is preferred, or a combination of at least 95% by weight of PEF and at most 5% by weight of PET.

The amounts of each of the different monomeric units in the polyester copolymer can be determined by proton nuclear magnetic resonance (¹H NMR). One skilled in the art would easily find the conditions of analysis to determine the amount of each of the different monomer units in the polyester copolymer.

The polyester copolymer(s) according to the invention can be a random copolymer or can have a more blocky microstructure, since the (novel) copolymers **A** are not solely produced from monomers, but also from PET and/or PEF as starting materials.

The number average molecular weight (Mn) of the polyester copolymer(s) may vary and may depend for example on the added monomer type and amount, the catalyst, the reaction time and reaction temperature and pressure.

The polyester copolymer(s) according to the invention preferably has/have a number average molecular weight of equal to or more than 16500 grams/mole, more preferably of equal to or more than 20000 grams/mole up to at most 50000 grams/mole.

The weight average molecular weight (Mw) and the number average molecular weight (Mn) can be determined by means of gel permeation chromatography (GPC) at 35° C, using for the calculation poly(methyl methacrylate) standards as reference material, and using hexafluoro-2-propanol as eluent. All molecular weights herein are determined as described under the analytical methods section of the examples.

The polyester copolymer according to the present invention has a polydispersity index (that is, the ratio of weight average molecular weight (Mw) to number average molecular weight (Mn), i.e. Mw/Mn) in the range from equal to or higher than 1.6 to equal to or lower than 2.6.

The glass transition temperature of the polyester copolymer can be measured by conventional methods, in particular by using differential scanning calorimetry (DSC) with a heating rate of 10 °C/minute in a nitrogen atmosphere. All glass transition temperatures herein are determined as described under the analytical methods section of the examples.

In a further embodiment of the invention, in the process also a monohydric alcohol in which the hydroxy group is the only reactive functional group, may be added in addition to the polyester (i), the one or more diols (ii) and the one or more (hetero)aromatic dicarboxylic acids or any esters thereof (iii), in 10-100 weight % with regard to the total weight of the other reactants (i), (ii) and (iii), wherein the monohydric alcohol has a boiling point of equal to or higher than 175 °C and an acid dissociation constant (pKa) of equal to or less than 12.0 and equal to or more than 7.0. In particular, the monohydric alcohol is an optionally substituted phenol, such as phenol, p-alkylphenol, p-alkoxyphenol, guaiacol, etc.. The addition of the monohydric alcohol may take place before the reaction starts, e.g. preferably by first mixing PET with the alcohol, but it may also be added in a later stage during the reaction, or both at the start and during the reaction, whenever required. The monohydric alcohol may serve as a reactive diluent in the reaction mixture, which may be desirable or considered necessary under certain circumstances. For instance, when using monohydric alcohol in the presently claimed process, and when compared to polymerization techniques known in the art which start from a mixture of monomers, less of the isosorbide is lost during polymerization, and more isosorbide is incorporated in the resulting polyester copolymer.

The process according to the invention comprises several stages. The process according to the invention comprises an esterification/transesterification stage and a polycondensation stage, wherein the esterification/transesterification stage is carried out prior to the polycondensation stage. The esterification/transesterification stage may suitably be preceded by an introduction stage, comprising introducing solid PET and/or PEF and suitable monomers into a reactor. During the esterification/transesterification reaction, condensation products, such as water and/or alcohol, may be distilled off. The polycondensation stage may suitably be succeeded by a recovery stage, wherein the polyester copolymer is recovered from a reactor.

The process according to the invention can be carried out in a batch-wise, semi-batchwise or continuous mode. The esterification/transesterification stage and the polycondensation stage may conveniently be carried out in one and the same reactor, but may also be carried out in two separate reactors, for example where the esterification/ transesterification stage is carried out in a first esterification/transesterification reactor and the polycondensation stage is carried out in a second polycondensation reactor.

In any introduction stage the monomers may be introduced into the reactor simultaneously, for example in the form of a feed mixture, or in separate parts. The monomers may be introduced into the reactor in a molten phase or they can be molten and mixed after introduction into the reactor.

The esterification/transesterification stage is preferably carried out in a total reaction time in the range from equal to or more than 3.0 hour, to equal to or less than 6.0 hour, and possibly to equal to or less than 4.0 hour. During a transesterification stage, the temperature may be stepwise or gradually increased. To avoid misunderstanding, the esterification/transesterification of the present process comprises steps/stages (a) and (b) (*vide supra*)*.*

The polycondensation stage (c) is carried out in a reaction time in the range from equal to or more than 1.0 hour, to equal to or less than 4.0 hours. During the polycondensation stage, the temperature may be stepwise or gradually increased.

The polycondensation stage is suitably carried out at a temperature equal to or higher than the temperature at which the transesterification stage (b) is carried out. The transesterification stage is for example carried out at a temperature in the range from equal to or higher than 220 °C, more preferably equal to or higher than 230°C, to equal to or lower than 270 °C, preferably to equal to or lower than 250 °C. The polycondensation stage suitably succeeds the transesterification stage and the polycondensation stage is for example carried out at a temperature in the range from equal to or higher than 250 °C, more preferably equal to or higher than 265 °C, to equal to or lower than 285 °C, preferably to equal to or lower than 280 °C and most preferably equal to or lower than 275 °C.

The polycondensation stage may be succeeded by a recovery stage, wherein the polyester copolymer as described above is recovered from the reactor. The polyester can for example be recovered by extracting it from the reactor in the form of a string of molten polymer. This string can be converted into granules using conventional granulation techniques.

The esterification/transesterification stage is preferably carried out under an inert gas atmosphere, suitably at ambient pressure or slightly above that, e.g. up to 5 bar. The polycondensation stage is carried out at reduced pressure.

The process according to the invention may be carried out in the presence of one or more additives, such as stabilizers, for example light stabilizers, UV stabilizers and heat stabilizers, fluidifying agents, flame retardants and antistatic. Phosphoric acid is an example of a stabilizer applied in PET. Additives may be added at the start of the process, or during or after the polymerization reaction. Other additives include primary and/or secondary antioxidants. A primary antioxidant can for example be a sterically hindered phenol, such as the compounds Hostanox^{®} 0 3, Hostanox^{®} 0 10, Hostanox^{®} 0 16, Ultranox^{®} 210, Ultranox^{®}276, Dovernox^{®} 10, Dovernox^{®} 76, Dovernox^{®} 3114, Irganox^{®} 1010 or Irganox^{®} 1076. A secondary antioxidant can for example be a trivalent phosphorous-comprising compounds, such as Ultranox^{®} 626, Doverphos^{®} S-9228 or Sandostab^{®} P-EPQ.

The process according to the invention is suitably carried out in the presence of a metal-containing catalyst. Such metal-containing catalyst may for example comprise derivatives of tin (Sn), titanium (Ti), zirconium (Zr), germanium (Ge), antimony (Sb), bismuth (Bi), hafnium (Hf), magnesium (Mg), cerium (Ce), zinc (Zn), cobalt (Co), iron (Fe), manganese (Mn), calcium (Ca), strontium (Sr), sodium (Na), lead (Pb), potassium (K), aluminium (Al), and/or lithium (Li). Examples of suitable metal-containing catalysts include salts of Li, Ca, Mg, Mn, Zn, Pb, Sb, Sn, Ge, and Ti, such as acetate salts and oxides, including glycol adducts, and Ti alkoxides. Examples of such compounds can, for example, be those given in US2011282020A1 in sections [0026] to [0029], and on page 5 of WO 2013/062408 A1. Preferably the metal-containing catalyst is a tin-containing catalyst, for example a tin(IV)- or tin(II)-containing catalyst. More preferably the metal-containing catalyst is an alkyltin(IV) salt and/or alkyltin(II) salt. Examples include alkyltin(IV) salts, alkyltin(II) salts, dialkyltin(IV) salts, dialkyltin(II) salts, trialkyltin(IV) salts, trialkyltin(ll) salts or a mixture of one or more of these. These tin(IV) and/or tin(II) catalysts may be used with alternative or additional metal-containing catalysts. Examples of alternative or additional metal-containing catalysts that may be used include one or more of titanium(IV) alkoxides or titanium(IV) chelates, zirconium(IV) chelates, or zirconium(IV) salts (e.g. alkoxides); hafnium(IV) chelates or hafnium(IV) salts (e.g. alkoxides); yttrium(III) alkoxides or yttrium(III) chelates; lanthanum(III) alkoxides or lanthanum chelates; scandium(III) alkoxides or chelates; cerium(III) alkoxides or cerium chelates. An exemplary metal-containing catalyst is n-butyltinhydroxide oxide.

The process according to the invention may optionally further comprise, after a recovery stage (i.e. wherein the polyester copolymer is recovered from the reactor) as described above, a stage of polymerization in the solid state. That is, the polyester copolymer recovered as described above may be polymerized further in the solid state, thereby increasing chain length. Such polymerization in the solid state is also referred to as a solid state polymerization (SSP). Such a solid state polymerization advantageously allows one to further increase the number average molecular weight of the polyester copolymer. If applicable, SSP can further advantageously enhance the mechanical and rheological properties of polyester copolymers before injection blow molding or extruding. The solid state polymerization process preferably comprises heating the polyester copolymer in the essential or complete absence of oxygen and water, for example by means of a vacuum or purging with an inert gas.

Advantageously the process according to the invention can therefore comprise:
- a melt polymerization wherein the above described polymers and monomers are polymerized in a melt to produce a polyester copolymer melt product;
- an optional pelletisation wherein the polyester copolymer melt product is converted into pellets, and the optional drying of the pellets under vacuum or with the help of inert gas purging;
- an optional solid state polymerization of the polyester copolymer melt product, optionally in the form of pellets, at a temperature above the Tg of the polyester copolymer melt product and below the melt temperature of the polyester copolymer melt product.

Generally, solid state polymerization may suitably be carried out at a temperature in the range from equal to or more than 150°C to equal to or less than 220°C. The solid state polymerization may suitably be carried out at ambient pressure (i.e. 1.0 bar atmosphere corresponding to 0.1 MegaPascal) whilst purging with a flow of an inert gas (such as for example nitrogen or argon) or may be carried out at a vacuum, for example a pressure equal to or below 100 millibar (corresponding to 0.01 MegaPascal). The solid state polymerization may suitably be carried out for a period up to 120 hours, more suitably for a period in the range from equal to or more than 2 hours to equal to or less than 60 hours. The duration of the solid state polymerization may be tuned such that a desired final number average molecular weight for the polyester copolymer is reached.

The present invention further provides a polyester copolymer obtainable by, or in particular obtained by, a process according to the invention. In particular preferred are polyester copolymers comprising monomer units derived from said (bi)cyclic secondary diol (especially isosorbide) in 10-60 mole % (on the basis of total diol). Such polyester copolymer preferably has a glass transition temperature of equal to or higher than 80 °C, more preferably equal to or higher than 100°C, in particular up to and including 160 °C.

Non-limiting examples of novel polyester copolymers A according to the invention include (wherein mole % is on the basis of total diol, diacid, respectively):
- PEITF (i.e. a polyester copolymer prepared from PET + 10-60 mole % of isosorbide (ISO) + 10-60 mole % of furandicarboxylic acid [FDCA]);
- PEIFT (i.e. a polyester copolymer prepared from PEF + 10-60 mole % of ISO + 10-60 mole % of terephthalic acid [PTA]);
- specifically, a PEITF polyester copolymer prepared from PET with amount of ISO equal to that of FDCA and >5 mole %; and a PEIFT polyester copolymer prepared from PEF with amount of ISO equal amount to that of PTA and > 5 mole %
- PEITF50 (i.e. a polyester copolymer prepared from PET with 50 mole % of ISO and FDCA), which is the same as PEIFT50 (i.e. a polyester copolymer prepared from PEF with 50 mole % of ISO and PTA), in which PEITF50 is preferred.

A preferred embodiment of the present invention is a polyester copolymer A obtainable by a process according to the invention, in particular selected from a polyester copolymer comprising (hetero)aromatic dicarboxylic acid-derived monomer units and diol-derived monomer units in a 1 : 1 ratio, having a number average molecular weight, as measured by gel permeation chromatography with PMMA standards as reference material, of 16500 daltons or more, and having a polydispersity index in the range from equal to or higher than 1.6 to equal to or lower than 2.6, and having a glass transition temperature, as determined using differential scanning calorimetry, of equal to or higher than 60 °C up to 160 °C containing:
(a) in the range from equal to or more than 5 mole %, preferably equal to or more than 10 mole % to equal to or less than 60 mole %, based on the total amount of diol-derived monomer units within the polyester copolymer, of one or more (bi)cyclic secondary diol monomer units (in particular isosorbide-derived units);
(b) in the range from equal to or more than 40 mole % to equal to or less than 90 mole %, based on the total amount of diol-derived monomer units within the polyester copolymer, of a monomer unit derived from ethylene glycol;
(c) optionally up to 5 mole %, based the total amount of diol-derived monomer units within the polyester copolymer, of a monomer unit derived from diethylene glycol;
   and either (d1) or (d2):
   (d1) from equal to or more than 40 mole % to 90 mole % based on the total amount of (hetero)aromatic dicarboxylic acid-derived monomer units within the polyester copolymer, of a monomer unit derived from terephthalic acid, the remainder of the (hetero)aromatic dicarboxylic acid-derived monomer units being a monomer unit derived from furandicarboxylic acid; or
   (d2) from equal to or more than 40 mole % to 90 mole % based on the total amount of (hetero)aromatic dicarboxylic acid-derived monomer units within the polyester copolymer, of a monomer unit derived from furandicarboxylic acid, the remainder of the (hetero)aromatic dicarboxylic acid-derived monomer units being a monomer unit derived from terephthalic acid; and
   (e) optionally up to 5 mole %, based the total amount of (hetero)aromatic dicarboxylic acid-derived monomer units within the polyester copolymer, of a monomer unit derived from isophthalic acid; and
   (f) optionally equal to or more than 0 mole % to equal to or less than 20 mole %, based the total amount of diol-derived monomer units within the polyester copolymer, of a monomer unit derived from 1,2-propanediol, 2,3-butanediol, neopentylglycol, cyclohexanedimethanol, 2,3:4,5-di-O-methylene-galactitol or 2,4:3,5-di-O-methylene-D-mannitol.

The polyester copolymer A obtainable according to the process of the invention can suitably be combined with additives and/or other (co)polymers and therefore the invention further provides a composition comprising said polyester copolymer and in addition one or more additives and/or one or more additional other (co)polymers.

Such composition can for example comprise, as additive, nucleating agents. These nucleating agents can be organic or inorganic in nature. Examples of nucleating agents are talc, calcium silicate, sodium benzoate, calcium titanate, boron nitride, zinc salts, porphyrins, chlorin and phlorin.

The composition according to the invention can also comprise, as additive, nanometric (i.e. having particles of a nanometric size) or non-nanometric and functionalized or non-functionalized fillers or fibres of organic or inorganic nature. They can be silicas, zeolites, glass fibres or beads, clays, mica, titanates, silicates, graphite, calcium carbonate, carbon nanotubes, wood fibres, carbon fibres, polymer fibres, proteins, cellulose fibres, lignocellulose fibres and nondestructured granular starch. These fillers or fibres can make it possible to improve the hardness, the stiffness or the permeability to water or to gases. The composition can comprise from 0.1% to 75% by weight, for example from 0.5% to 50% by weight, of fillers and/or fibres, with respect to the total weight of the composition. The composition can also be of composite type, that is to say can comprise large amounts of these fillers and/or fibres.

The composition can also comprise, as additive, opacifying agents, dyes and pigments. They can be chosen from cobalt acetate and the following compounds: HS-325 Sandoplast^{®} Red BB, which is a compound carrying an azo functional group also known under the name Solvent Red 195, HS-510 Sandoplast^{®} Blue 2B, which is an anthraquinone, Polysynthren^{®} Blue R and Clariant^{®} RSB Violet.

The composition can also comprise, as additive, a processing aid for reducing the pressure in the processing device. A mould-release agent, which makes it possible to reduce the adhesion to the equipment for shaping the polyester, such as the moulds or the rollers of calendering devices, can also be used. These agents can be selected from fatty acid esters and amides, metal salts, soaps, paraffins or hydrocarbon waxes. Specific examples of these agents are zinc stearate, calcium stearate, aluminium stearate, stearamide, erucamide, behenamide, beeswax or Candelilla wax.

The composition can also comprise other additives, such as stabilizers, etc. as mentioned herein above.

In addition, the composition can comprise one or more additional polymers other than the one or more polyester copolymers according to the invention. Such additional polymer(s) can suitably be chosen from the group consisting of polyamides, polystyrene, styrene copolymers, styrene/acrylonitrile copolymers, styrene/acrylonitrile/butadiene copolymers, polymethyl methacrylates, acrylic copolymers, poly(ether/imide)s, polyphenylene oxides, such as poly(2,6-dimethylphenylene oxide), polyphenylene sulfide, poly(ester/carbonate)s, polycarbonates, polysulphones, polysulphone ethers, polyetherketones and blends of these polymers.

The composition can also comprise, as additional polymer, a polymer which makes it possible to improve the impact properties of the polymer, in particular functional polyolefins, such as functionalized polymers and copolymers of ethylene or propylene, core/shell copolymers or block copolymers.

The compositions according to the invention can also comprise, as additional polymer(s), polymers of natural origin, such as starch, cellulose, chitosans, alginates, proteins, such as gluten, pea proteins, casein, collagen, gelatin or lignin, it being possible or not for these polymers of natural origin to be physically or chemically modified. The starch can be used in the destructured or plasticized form. In the latter case, the plasticizer can be water or a polyol, in particular glycerol, polyglycerol, isosorbide, sorbitans, sorbitol, mannitol or also urea. Use may in particular be made, in order to prepare the composition, of the process described in the document WO 2010/010282A1.

These compositions can suitably be manufactured by conventional methods for the conversion of thermoplastics. These conventional methods may comprise at least one stage of melt or softened blending of the polymers and one stage of recovery of the composition. Such blending can for example be carried out in internal blade or rotor mixers, an external mixer, or single-screw or co-rotating or counter-rotating twin-screw extruders. However, it is preferred to carry out this blending by extrusion, in particular by using a co-rotating extruder. The blending of the constituents of the composition can suitably be carried out at a temperature ranging from 220 to 300°C, preferably under an inert atmosphere. In the case of an extruder, the various constituents of the composition can suitably be introduced using introduction hoppers located along the extruder.

The invention also relates to an article comprising a polyester copolymer **A** according to the invention or a composition comprising a polyester copolymer **A** according to the invention and one or more additives and/or additional polymers. The polyester copolymer **A** may conveniently be used in the manufacturing of films, fibres, injection moulded parts and packaging materials, such as for example receptacles. The use of the polyester copolymer **A** is especially advantageous where such films, fibres, injection moulded parts or packaging materials need to be heat-resistant or cold-resistant.

The article can also be a fibre for use in for example the textile industry. These fibres can be woven, in order to form fabrics, or also nonwoven.

The article can also be a film or a sheet. These films or sheets can be manufactured by calendering, cast film extrusion or film blowing extrusion techniques. These films can be used for the manufacture of labels or insulators.

This article can be a receptacle especially for use for hot filling and reuse applications. This article can be manufactured from the polyester copolymer or a composition comprising a polyester copolymer and one or more additives and/or additional polymers using conventional conversion techniques. The article can also be a receptacle for transporting gases, liquids and/or solids. The receptacles concerned may be baby's bottles, flasks, bottles, for example sparkling or still water bottles, juice bottles, soda bottles, carboys, alcoholic drink bottles, medicine bottles or bottles for cosmetic products, dishes, for example for ready-made meals or microwave dishes, or also lids. These receptacles can be of any size.

The article may for example be suitably manufactured by extrusion-blow moulding, thermoforming or injection-blow moulding.

The present invention therefore also conveniently provides a method for manufacturing an article, comprising the use of one or more polyester copolymers **A** according to the invention and preferably comprising the following steps: 1) the provision of a polyester copolymer **A** obtainable according to the process of this invention; 2) melting said polyester copolymer, and optionally one or more additives and/or one or more additional polymers, to thereby produce a polymer melt; and 3) extrusion-blow moulding, thermoforming and/or injection-blow moulding the polymer melt into the article.

The article can also be manufactured according to a process comprising a stage of application of a layer of polyester in the molten state to a layer based on organic polymer, on metal or on adhesive composition in the solid state. This stage can be carried out by pressing, overmoulding, lamination, extrusion-lamination, coating or extrusion-coating.

The invention is further illustrated by the following non-limiting examples.

### EXAMPLES

### List of abbreviations

DEG = diethyleneglycol
DSC = differential scanning calorimetry
FDCA = 2,5-furandicarboxylic acid
GPC = gel permeation chromatography
HFIP = hexafluoro-2-propanol
IPA = isophthalic acid
ISO = isosorbide
MEG = (mono) ethyleneglycol
Mn = number average molecular weight
Mw = weight average molecular weight
PDI = polydispersity index
PEF = polyethylene furan-2,5-dicarboxylate
PET = polyethyleneterephthalate
PEIT = polyethylene co-isosorbide terephthalate
PEITF = polyethylene co-isosorbide terephthalate co-furan-2,5-dicarboxylate
PEIFT = polyethylene co-isosorbide furan-2,5-dicarboxylate co-terephthalate
PMMA = poly(methyl methacrylate)
PTA = (purified) terephthalic acid
TCE = 1,1,2,2-tetrachloroethane
TCE-d2 = 1,2-dideutero-1,1,2,2-tetrachloroethane
Tg = glass transition temperature

### Analytical methods:

In the below examples, the weight average molecular weight (Mw) and the number average molecular weight (Mn) have been determined by means of gel permeation chromatography (GPC). GPC measurements were performed at 35° C. For the calculation PMMA standards were used as reference material. As eluent HFIP was used at 1mL/min. The GPC measurements were carried out under these conditions on a Hitachi Chromaster 5450 with a Agilent HPLC system equipped with two PFG 7 micrometer (µm) Linear M (300×7.5 mm) columns. Calculation of the molecular weights was carried out with Astra 6 Software.

The glass transition temperature of the polyester polymers and copolymers in the below examples was determined using differential scanning calorimetry (DSC) with heating rate 10 °C/minute in a nitrogen atmosphere. In the second heating cycle, a glass transition, (Tg), was recorded.

The content of the monomer units in the polyester polymers and copolymers of the below examples was determined by proton nuclear magnetic resonance (¹H NMR). The content of diol and diacid monomer units was determined using deutero-dichromethane as a solvent, and dichloromethane as a reference.

### Examples 1 - 6: Preparation of PEI(T)(F) from PE(T)(F)

Procedure: 13.8 mg of butyltin hydroxide oxide (0.07 mmol), 4.019 g of isosorbide (27.50 mmol), 4.009 gram of terephthalic acid (24.13 mmol) and 16.016 g of PET (commercially available RAMA PET N180, 83.40 mmol) were weighed into a 100 mL glass reactor equipped with a mechanical stirrer, nitrogen gas inlet, a distillation head that connected a receiver to collect the condensation products. The glass reactor was heated by means of an oil bath.
1) The reactor contents were heated in a nitrogen flowing atmosphere (45 mL/min), as soon as the oil temperature reached 240 °C, stirring was started with 30 rpm. After 15 minutes, the temperature was increased to 245 °C; kept for 15 minutes, while the stirring was increased to 100 rpm; subsequently the temperature was increased to 250 °C, kept for 20 minutes, then stirring was increased to 150 rpm. The temperature and stirring rate were maintained for about 180 minutes during which the reactor contents melted and changed into a clear liquid.
2) The temperature was increased to 255 °C and stirring continued at 150 rpm for 40 minutes and at 265 °C and 100 rpm for 40 minutes, while removing water.
3) After reducing the pressure to 400 mbar, within 15 minutes the pressure was reduced to lower than 1 mbar in at least 4 steps, at the same time the temperature was increased to 280-285 °C. The reaction time at this stage depends on the polymer viscosity. After about 40 minutes, the torque reached 30 Ncm at 30 rpm, nitrogen gas was introduced until ambient pressure was reached and the stirring was stopped, after which the polymer was taken out of the reactor.

Experiments 1-6 were performed with varying (ratios of) reagents. The feed data and the results are summarized in Table 1 below. IPA and DEG were present in the PET used in these experiments.

**Table 1**

| | Feed | | PEIT | | | | | | | |
|---|---|---|---|---|---|---|---|---|---|---|
| Ex. | PET/TPA/ISO | ISO/(PET+TPA) | IPA | DEG | ISO | Mn (GPC) | Mw GPC) | Mw/Mn | Tg (°C) | - |
| | (mole ratio) | (mole ratio) | (mole%) | (mole%) | (mole%) | (g/mole) | (g/mole) | | | |
| 1 | 3.46/1/1.14 | 25.5/100 | 1.7 | 2.5 | 23.9 | 19732 | 49240 | 2.50 | 103.0 | - |
| 2 | 2.77/1/1.14 | 30.3/100 | | 2.3 | 28.4 | 27000 | 64000 | 2.36 | 108.4 | - |
| 3 | 1.41/1/1.14 | 47.1/100 | 1.9 1.9 | 2.5 | 43.2 | 16600 | 37850 | 2.28 | 127.0 | - |
| | | | | | | | | | | |

| | Feed | | PEITF | | | | | | | |
|---|---|---|---|---|---|---|---|---|---|---|
| Ex. | PET/FDCA/ISO (mole ratio) | ISO/(PET+TPA) (mole ratio) | IPA (mole%) | DEG (mole%) | ISO (mole%) | Mn (GPC) (g/mol) | Mw GPC) (g/mol) | Mw/Mn | Tg (°C) | FDCA (mole%) |
| 4 | 4.51/1/1.12 | 20.4/100 | 1.9 | 2.8 | 19.1 | 32591 | 76416 | 2.35 | 103.0 | 20.3 |
| | | | | | | | | | | |

| | Feed | | PEIF | | | | | | | |
|---|---|---|---|---|---|---|---|---|---|---|
| Ex. | PEF/FDCA/ISO (mole ratio) | ISO/(PEF+FDCA) (mole ratio) | - | DEG (mole%) | ISO (mole%) | Mn (GPC) (g/mol) | Mw GPC) (g/mol) | Mw/Mn | Tg (°C) | - |
| 5 | 2.82/1/1.08 | 28.2/100 | | 3.6 | 27.3 | 25173 | 61672 | 2.45 | 109.7 | |
| | | | | | | | | | | |

| | Feed | | PEIFT | | | | | | | |
|---|---|---|---|---|---|---|---|---|---|---|
| Ex. | PEF/PTA/ISO | ISO/(PEF+PTA) | PTA | DEG | ISO | Mn (GPC) | Mw GPC) | Mw/Mn | Tg (°C) | - |
| | (mole ratio) | (mole ratio) | (mole%) | (mole%) | (mole%) | (g/mol) | (g/mol) | | | |
| 6 | 2.92/1/1.09 | 27.9/100 | 25.9 | 3.6 | 27.4 | 24889 | 60035 | 2.41 | 107.7 | |

### Examples 7 and 8 (autoclave)

In these examples, the effect of p-methoxyphenol was tested.

In Example 7, 400.00 g of PET was used and 126.10 g of TPA, 126.80 g of isosorbide, 125.10 g of p-MeOPhOH, and 0.375 g of the catalyst BuSnO(OH).H2O.

In Example 8, 400.00 g of PET was used and 126.10 g of TPA, 126.80 g of isosorbide, no p-methoxyphenol, and 0.375 g of the catalyst BuSnO(OH).H2O.

The reactions were performed according to the procedure described for Example 1. The esterification reactions were performed between 240-245 °C of oil temperature for 5 hours. And polycondensation reactions were performed at 275-285 °C of oil temperature for 3.5 hours at vacuum 0.1 mbar. The polymerization was stopped at 936 Ncm/12 rpm for example 7 and 1080 Ncm/12 rpm for example 8.

The feed data and the results are summarized in Table 2 below.

It was found that in the presence of p-methoxyphenol, the ISO content in the PEIT product is higher than in the absence of p-methoxyphenol (in Example 7 more ISO is found in the resulting PEIT product than in the PEIT product Example 8).

**Table 2**

| | Feed | | PEIT | | | | | | | |
|---|---|---|---|---|---|---|---|---|---|---|
| Ex. | PET/TPA/ISO/ p-MeOPhOH | ISO/(PET+TPA) | IPA (mole%) | DEG | ISO | Mn (GPC) | Mw (GPC) | Mw/Mn | Tg (°C) | p-MeOPhO ending group (mole%) |
| | (mole ratio) | (mole ratio) | | (mole%) | (mole%) | (g/mole) | (g/mole) | | | |
| 7 | 2.74/1/1.14/1.33 | 30.5/100 | 1.6 | 2.5 | 29.4 | 17590 | 39239 | 2.23 | 105.2 | 1.5 |
| 8 | 2.77/1/1.14/- | 30.3 /100 | 1.9 | 2.3 | 28.4 | 22798 | 59088 | 2.59 | 108.0 | - |

### Example 9

Reaction with relatively low ISO/TPA ratio, and also in the presence of p-MeOPhOH. The reaction was performed according to the procedure described for Example 1. The feed data and the results are summarized in Table 3 below.

**Table 3.**

| | Feed | | PEIT | | | | | | | |
|---|---|---|---|---|---|---|---|---|---|---|
| Ex. | PET/TPA/ISO/ p-MeOPhOH | ISO/(PET+TPA) | IPA (mole%) | DEG | ISO | Mn (GPC) | Mw (GPC) | Mw/Mn | Tg (°C) | p-MeOPhO ending group (mole%) |
| | (mole ratio) | (mole ratio) | | (mole%) | (mole%) | (g/mole) | (g/mole) | | | |
| 9 | 2.36/1/1.05/1.49 | 30.2/100 | 1.7 | 2.5 | 30.1 | 16530 | 37791 | 2.29 | 103.0 | 1.3 |

### Comparative Example 10

### PEIT produced according to Example 7 of US2020/0308396

Amounts used:
SbO₃ catalyst: 0.035 g; PET 20.00 g; TPA 5.75 g; isosorbide: 5.14 g
ISO/total diol in feed 25 %.

### Steps:

(1) Removing air, starting stirring at 150 rpm at room temperature. Gradually increasing the temperature to 285 °C, in 60 minutes;
(2) 285/305 °C (product/oil temp), stirring at 150 rpm, 90 minutes;
(3) Pressure to -28.9 " Hg (31 mbar), 285/305 °C (product/oil temp) for 3.5 hours.

The feed data and the results are summarized in Table 4 below.

**Table 4.**

| | Feed | | PEIT | | | | | | |
|---|---|---|---|---|---|---|---|---|---|
| Ex. | PET/TPA/ISO | ISO/(PET+TPA) | IPA (mole%) | DEG | ISO | Mn (GPC) | Mw (GPC) | Mw/Mn | Tg (°C) |
| | (mole ratio) | (mole ratio) | | (mole%) | (mole%) | (g/mol) | (g/mol) | | |
| 10 | 3.03/1/1.02 | 25.3/100 | 1.2 | 2.8 | 23.2 | 10400 | 32700 | 3.14 | 102.0 |

## Claims

1. A polymerization process for the production of a polyester copolymer A comprising simultaneously reacting a polyester (i) with one or more diols (ii) and one or more (hetero)aromatic dicarboxylic acids or any esters thereof (iii),
wherein the polyester (i) is polyethylene terephthalate, polyethylene furanoate or polyethylene terephthalate-co-furanoate; and
wherein no ethylene glycol is added as a diol (ii); and
wherein at least one of the one or more diols (ii) is isosorbide; and
wherein the one or more (hetero)aromatic dicarboxylic acids or any esters thereof (iii) is/are each individually selected from terephthalic acid, a terephthalic acid monoester, a terephthalic acid diester, a furandicarboxylic acid, a furandicarboxylic acid monoester, and a furandicarboxylic acid diester; and
wherein the components (i) and (ii) are used in sufficient quantities to produce a polyester copolymer **A** comprising at least 40 mole % of ethylene glycol derived from the starting polyethylene terephthalate, polyethylene furanoate or polyethylene terephthalate-co-furanoate, and at least 5 mole %, preferably equal to or more than 10 mole %, of monomers derived from isosorbide, the percentages based on the total amount of diol-derived monomer units in polyester copolymer **A;**
and wherein the process comprises heating the mixture of polyester (i), the one or more diols (ii) and the one or more (hetero)aromatic dicarboxylic acids or any esters thereof (iii) to form a melt, comprising the steps (a) to (d):
(a) in a reaction vessel heating the polyester (i), the one or more diols (ii) and the one or more (hetero)aromatic dicarboxylic acids or any esters thereof (iii) to a certain temperature high enough to form a slurry/melt, so that the reaction mixture has a temperature from at least 220°C to 260 °C, for a certain period of time until a clear melt forms, specifically being 120 to 250 minutes, at a pressure of 1 to 5 bar;
(b) continuing the esterification/transesterification reaction for a period of 60 to 100 minutes while gradually increasing the temperature of the reaction mixture to a temperature not higher than 270 °C and gradually reducing the pressure to atmospheric pressure;
(c) while starting at the same temperature as the temperature of step (b), treating the product resulting from step (b) with a pressure lower than 20 mbar, preferably lower than 10 mbar, and more preferably lower than 5 mbar with continued stirring for 60 to 240 minutes; and optionally at the end of step (c), in order to easily discharge the polyester, further increasing the temperature by 0.1 °C to 50 °C to a temperature not higher than 285 °C;
and (d) discharge the polyester at a pressure of 1 to 5 bar; and
to generate a polyester **A** comprising monomer units derived from the polyester (i), the one or
more diols (ii) and the one or more (hetero)aromatic dicarboxylic acids or any esters thereof (iii), having a number average molecular weight, as measured by gel permeation chromatography with PMMA standards as reference material, of 16500 daltons or more, and having a polydispersity index in the range from equal to or higher than 1.6 to equal to or lower than 2.6 and having a glass transition temperature, as determined using differential scanning calorimetry, in the range from equal to or higher than 60 °C to lower than 160 °C.

2. The process of claim 1, wherein the polyester copolymer **A** generated by the process comprises monomer units derived from isosorbide in at least 10 mole %, preferably 20-30 mole %, suitably 30-40 mole %, up to 60 mole %, the percentage based on the total amount of diol-derived monomer units in polyester copolymer **A.**

3. The process of any one of claims 1 to 2, wherein, in addition to the isosorbide, a further diol (ii) is selected from 1,2-propanediol, 2,3-butanediol, neopentylglycol, cyclohexanedimethanol, 2,3:4,5-di-O-methylene-galactitol and 2,4:3,5-di-O-methylene-D-mannitol.

4. The process of claim 3, wherein, in addition to the isosorbide, cyclohexanedimethanol is used as a further diol (ii).

5. The process of claim 1, wherein the one or more diols (ii) and the one or more (hetero)aromatic dicarboxylic acids or any esters thereof (iii) are used in the process in a molar ratio of the total sum of diols to the total sum of dicarboxylic acids or any esters thereof of 1.5 : 1.0 to 1.0 : 1.0.

6. The process of claim 5, wherein the one or more (hetero)aromatic dicarboxylic acids or any esters thereof (iii) is terephthalic acid and/or furandicarboxylic acid.

7. The process of any one of claims 1 to 6, wherein in addition to the polyester (i), the one or more diols (ii) and the one or more (hetero)aromatic dicarboxylic acids or any esters thereof (iii) also a monohydric alcohol in which the hydroxy group is the only reactive functional group, is added in 10-100 weight % with regard to the total weight of the other reactants (i), (ii) and (iii), wherein the monohydric alcohol has a boiling point of equal to or higher than 175 °C and an acid dissociation constant (pKa) of equal to or less than 12.0 and equal to or more than 7.0.

8. The process of any one of claims 1-7, wherein the components (i) and (ii) are used in sufficient quantities to produce a polyester copolymer **A** comprising 10-60 mole %, of monomers derived from isosorbide, the percentages based on the total amount of diol-derived monomer units in polyester copolymer; and
to generate a polyester **A** having a glass transition temperature, as determined using differential scanning calorimetry, in the range from equal to or higher than 80 °C to lower than 160 °C.

9. The process of any one of claims 1-8, to generate a polyester **A** having a glass transition temperature, as determined using differential scanning calorimetry, in the range from equal to or higher than 100 °C to lower than 160 °C.

10. A polyester copolymer **A** obtainable by a process according to any one of claims 1 to 9, in particular selected from a polyester copolymer, comprising (hetero)aromatic dicarboxylic acid-derived monomer units and diol-derived monomer units in a 1 : 1 ratio, having a number average molecular weight, as measured by gel permeation chromatography with PMMA standards as reference material, of 16500 daltons or more, and having a polydispersity index in the range from equal to or higher than 1.6 to equal to or lower than 2.6, and having a glass transition temperature, as determined using differential scanning calorimetry, of equal to or higher than 60 °C up to 160 °C containing:
(a) in the range from equal to or more than 5 mole %, preferably equal to or more than 10 mole % to equal to or less than 60 mole %, based on the total amount of diol-derived monomer units within the polyester copolymer, of isosorbide monomer units;
(b) in the range from equal to or more than 40 mole % to equal to or less than 90 mole %, based on the total amount of diol-derived monomer units within the polyester copolymer, of a monomer unit derived from ethylene glycol;
(c) optionally up to 5 mole %, based the total amount of diol-derived monomer units within the polyester copolymer, of a monomer unit derived from diethylene glycol;
and either (d1) or (d2):
(d1) from equal to or more than 40 mole % to 90 mole % based on the total amount of (hetero)aromatic dicarboxylic acid-derived monomer units, of a monomer unit derived from terephthalic acid, the remainder of the (hetero)aromatic dicarboxylic acid-derived monomer units being a monomer unit derived from furandicarboxylic acid; or
(d2) from equal to or more than 40 mole % to 90 mole % based on the total amount of (hetero)aromatic dicarboxylic acid-derived monomer units, of a monomer unit derived from furandicarboxylic acid, the remainder of the (hetero)aromatic dicarboxylic acid-derived monomer units being a monomer unit derived from terephthalic acid; and
(e) optionally up to 5 mole %, based the total amount of (hetero)aromatic dicarboxylic acid-derived monomer units, of a monomer unit derived from isophthalic acid; and(f) optionally equal to or more than 0 mole % to equal to or less than 20 mole %, based the total amount of diol-derived monomer units, of a monomer unit derived from 1,2-propanediol, 2,3-butanediol, neopentylglycol, cyclohexanedimethanol, 2,3:4,5-di-O-methylene-galactitol or 2,4:3,5-di-O-methylene-D-mannitol.

11. The polyester copolymers **A** according to claim 10, selected from:
- PEITF, being a polyester copolymer prepared from PET, 10 to 60 mole % of isosorbide and 10 to 60 mole % of furandicarboxylic acid, and preferably a PEITF polyester copolymer prepared from PET with an amount of isosorbide of more than 5 mole % and equal to the amount of furandicarboxylic acid;
- PEIFT, being a polyester copolymer prepared from PEF, 10 to 60 mole % of isosorbide and 10 to 60 mole % of terephthalic acid; and preferably a PEIFT polyester copolymer prepared from PEF with an amount of isosorbide of more than 5 mole % and equal to the amount of terephthalic acid;
and preferably PEITF50, being a polyester copolymer prepared from PET with 50 mole % of isosorbide and furandicarboxylic acid, which is the same as PEIFT50 being a polyester copolymer prepared from PEF with 50 mole % of isosorbide and terephthalic acid, of which PEITF50 is more preferred;
wherein the mole % is on the basis of total diol and dicarboxylic acid, respectively.

12. A composition comprising the polyester copolymer **A** of claim 10, and in addition one or more additives and/or one or more additional other (co)polymers.

13. An article comprising the polyester copolymer **A** according to claim 10 or a composition comprising a polyester copolymer **A** according to claim 11 and one or more additives and/or additional polymers.

## Patentansprüche

1. Polymerisationsverfahren für die Produktion eines Polyester-Copolymers **A,** umfassend ein gleichzeitiges Reagieren eines Polyesters (i) mit einem oder mehreren Diolen (ii) und einer oder mehreren (hetero)aromatischen Dicarbonsäuren oder beliebigen Estern davon (iii),
wobei der Polyester (i) Polyethylenterephthalat, Polyethylenfuranoat oder Polyethylenterephthalat-co-furanoat ist; und
wobei kein Ethylenglycol als ein Diol (ii) zugesetzt wird; und
wobei mindestens eines des einen oder der mehreren Diole (ii) Isosorbid ist; und
wobei die eine oder die mehreren (hetero)aromatischen Dicarbonsäuren oder beliebige Ester (iii) davon jeweils einzeln aus Terephthalsäure, einem Terephthalsäuremonoester, einem Terephthalsäurediester, einer Furandicarbonsäure, einem Furandicarbonsäuremonoester und einem Furandicarbonsäurediester ausgewählt ist/sind; und
wobei die Komponenten (i) und (ii) in ausreichenden Mengen verwendet werden, um ein Polyester-Copolymer **A** zu produzieren, umfassend mindestens zu 40 Mol-% Ethylenglycol, das von dem Ausgangspolyethylenterephthalat, -polyethylenfuranoat oder -polyethylenterephthalat-co-furanoat abgeleitet ist, und mindestens zu 5 Mol-%, vorzugsweise gleich oder mehr als zu 10 Mol-%, Monomere, die von Isosorbid abgeleitet sind, wobei die Prozentangaben auf der Gesamtmenge der von Diol abgeleiteten Monomereinheiten in dem Polyester-Copolymer **A** basieren;
und wobei das Verfahren ein Erhitzen der Mischung aus Polyester (i), dem einen oder den mehreren Diolen (ii) und der einen oder den mehreren (hetero)aromatischen Dicarbonsäuren oder beliebigen Estern (iii) davon umfasst, um eine Schmelze auszubilden, umfassend die Schritte (a) bis (d):
(a) in einem Reaktionsgefäß, Erhitzen des Polyesters (i), des einen oder der mehreren Diole (ii) und der einen oder der mehreren (hetero)aromatischen Dicarbonsäuren oder beliebiger Estern davon (iii) auf eine Temperatur, die hoch genug ist, um eine Aufschlämmung/Schmelze auszubilden, sodass die Reaktionsmischung eine Temperatur von mindestens 220 °C bis 260 °C aufweist, für eine gewisse Zeitperiode, insbesondere 120 bis 250 Minuten, bis eine klare Schmelze ausgebildet wird, bei einem Druck von 1 bis 5 bar;
(b) Fortsetzen der Veresterungs-/Umesterungsreaktion für eine Periode von 60 bis 100 Minuten, während die Temperatur des Reaktionsgemisches allmählich auf eine Temperatur von nicht höher als 270 °C erhöht und der Druck allmählich auf Luftdruck verringert wird;
(c) während eines Startens der gleichen Temperatur wie die Temperatur in Schritt (b), Behandeln des Produkts aus Schritt (b) mit einem Druck von weniger als 20 mbar, vorzugsweise weniger als 10 mbar und mehr bevorzugt weniger als 5 mbar unter fortgesetztem Rühren 60 bis 240 Minuten lang; und optional am Ende von Schritt (c), um den Polyester leicht entladen zu können, weiteres Erhöhen der Temperatur um 0,1 °C bis 50 °C auf eine Temperatur von nicht höher als 285 °C; und (d) Ablassen des Polyesters bei einem Druck von 1 bis 5 bar; und
um einen Polyester **A** zu erzeugen, umfassend Monomereinheiten, die von dem Polyester (i), dem einen oder den mehreren Diolen (ii) und der einen oder den mehreren (hetero)aromatischen Dicarbonsäuren oder beliebigen Estern davon (iii) abgeleitet sind, die ein zahlenmittleres Molekulargewicht, wie durch Gelpermeationschromatographie mit PMMA-Standards als Referenzmaterial gemessen, von 16.500 Dalton oder mehr aufweisen, und einen Polydispersitätsindex in dem Bereich von gleich oder höher als 1,6 bis gleich oder niedriger als 2,6 aufweisen und eine Glasübergangstemperatur, wie unter Verwendung von dynamischer Differenzkalorimetrie bestimmt, in dem Bereich von gleich oder höher als 60 °C bis niedriger als 160 °C aufweisen.

2. Verfahren nach Anspruch 1, wobei das Polyester-Copolymer **A,** das durch das Verfahren erzeugt wird, Monomereinheiten enthält, die von Isosorbid abgeleitet werden, in mindestens 10 Mol-%, vorzugsweise 20-30 Mol-%, geeigneterweise 30-40 Mol-%, bis zu 60 Mol-%, wobei der Prozentsatz auf der Gesamtmenge der von Diol abgeleiteten Monomereinheiten in dem Polyester-Copolymer **A** basiert.

3. Verfahren nach einem der Ansprüche 1 bis 2, wobei, zusätzlich zu dem Isosorbid, ein weiteres Diol (ii) aus 1,2-Propandiol, 2,3-Butandiol, Neopentylglycol, Cyclohexandimethanol, 2,3:4,5-Di-O-methylengalactitol und 2,4:3,5-Di-O-methylen-D-mannitol ausgewählt wird.

4. Verfahren nach Anspruch 3, wobei, zusätzlich zu dem Isosorbid, Cyclohexandimethanol als ein weiteres Diol (ii) verwendet wird.

5. Verfahren nach Anspruch 1, wobei das eine oder die mehreren Diole (ii) und die eine oder die mehreren (hetero)aromatischen Dicarbonsäuren oder beliebige Ester davon (iii) in einem Molverhältnis der Gesamtsumme an Diolen zu der Gesamtsumme von Dicarbonsäuren oder beliebigen Estern davon von 1,5 : 1,0 bis 1,0 : 1,0 in dem Verfahren verwendet werden.

6. Verfahren nach Anspruch 5, wobei die eine oder die mehreren (hetero)aromatischen Dicarbonsäuren oder beliebige Ester davon (iii) Terephthalsäure und/oder Furandicarbonsäure sind.

7. Verfahren nach einem der Ansprüche 1 bis 6, wobei zusätzlich zu dem Polyester (i), dem einen oder den mehreren Diolen (ii) und der einen oder den mehreren (hetero)aromatischen Dicarbonsäuren oder beliebigen Estern davon (iii) auch ein einwertiger Alkohol, in dem die Hydroxygruppe die einzige reaktive funktionelle Gruppe ist, in 10-100 Gew.-%, bezogen auf das Gesamtgewicht der anderen Reaktanten (i), (ii) und (iii), zugesetzt wird, wobei der einwertige Alkohol einen Siedepunkt von gleich oder höher als 175 °C und eine Säuredissoziationskonstante (pKa) von gleich oder weniger als 12,0 und gleich oder mehr als 7,0 aufweist.

8. Verfahren nach einem der Ansprüche 1 bis 7, wobei die Komponenten (i) und (ii) in ausreichenden Mengen verwendet werden, um ein Polyester-Copolymer **A** zu produzieren, umfassend zu 10-60 Mol-% von Isosorbid abgeleitete Monomere, wobei die Prozentangaben auf der Gesamtmenge der von Diol abgeleiteten Monomereinheiten in dem Polyester-Copolymer basieren; und
um einen Polyester **A** zu erzeugen, der eine Glasübergangstemperatur, wie unter Verwendung von dynamischer Differenzkalorimetrie bestimmt, in dem Bereich von gleich oder höher als 80 °C bis niedriger als 160 °C aufweist.

9. Verfahren nach einem der Ansprüche 1 bis 8, um einen Polyester **A** zu erzeugen, der eine Glasübergangstemperatur, wie unter Verwendung von dynamischer Differenzkalorimetrie bestimmt, in dem Bereich von gleich oder höher als 100 °C bis niedriger als 160 °C aufweist.

10. Polyester-Copolymer **A,** das durch ein Verfahren nach einem der Ansprüche 1 bis 9 erhältlich ist, insbesondere aus einem Polyester-Copolymer ausgewählt, umfassend (hetero)aromatische, von Dicarbonsäuren abgeleitete Monomereinheiten und von Diolen abgeleitete Monomereinheiten in einem 1 : 1-Verhältnis, die ein zahlenmittleres Molekulargewicht, wie durch Gelpermeationschromatographie mit PMMA-Standards als Referenzmaterial gemessen, von 16500 Dalton oder mehr aufweisen, und einen Polydispersitätsindex in dem Bereich von gleich oder höher als 1,6 bis gleich oder niedriger als 2,6 aufweisen, und eine Glasübergangstemperatur, wie durch dynamische Differenzkalorimetrie bestimmt, von gleich oder höher als 60 °C bis 160 °C aufweisen, enthaltend:
(a) in dem Bereich von gleich oder mehr als zu 5 Mol-%, vorzugsweise gleich oder mehr als zu 10 Mol-% bis gleich oder weniger als zu 60 Mol-%, basierend auf der Gesamtmenge der von Diolabgeleiteten Monomereinheiten innerhalb des Polyester-Copolymers, Isosorbitmonomereinheiten;
(b) in dem Bereich von gleich oder mehr als zu 40 Mol-% bis gleich oder weniger als zu 90 Mol-%, basierend auf der Gesamtmenge der von Diol abgeleiteten Monomereinheiten innerhalb des Polyester-Copolymers, eine Monomereinheit, die von Ethylenglycol abgeleitet ist;
(c) optional bis zu 5 Mol-%, basierend auf der Gesamtmenge der von Diol abgeleiteten Monomereinheiten innerhalb des Polyester-Copolymers, eine Monomereinheit, die von Diethylenglycol abgeleitet ist;
und entweder (d1) oder (d2):
(d1) von gleich oder mehr als 40 Mol-% bis 90 Mol-%, basierend auf der Gesamtmenge der von (hetero)aromatischer Dicarbonsäure abgeleiteten Monomereinheiten, eine Monomereinheit, die von Terephthalsäure abgeleitet ist, wobei der Rest der von (hetero)aromatischer Dicarbonsäure abgeleiteten Monomereinheiten eine Monomereinheit ist, die von Furandicarbonsäure abgeleitet ist; oder
(d2) von gleich oder mehr als 40 Mol-% bis 90 Mol-%, basierend auf der Gesamtmenge der von (hetero)aromatischer Dicarbonsäure abgeleiteten Monomereinheiten, einer Monomereinheit, die von Furandicarbonsäure abgeleitet ist, wobei der Rest der von (hetero)aromatischer Dicarbonsäure abgeleiteten Monomereinheiten eine Monomereinheit ist, die von Terephthalsäure abgeleitet ist; und
(e) optional bis zu 5 Mol-%, basierend auf der Gesamtmenge der von (hetero)aromatischen Dicarbonsäure abgeleiteten Monomereinheiten, eine Monomereinheit, die von Isophthalsäure abgeleitet ist; und (f) optional gleich oder mehr als 0 Mol-% bis gleich oder weniger als 20 Mol-%, basierend auf der Gesamtmenge der von Diol abgeleiteten Monomereinheiten, eine Monomereinheit, die von 1,2-Propandiol, 2,3-Butandiol, Neopentylglycol, Cyclohexandimethanol, 2,3:4,5-Di-O-methylengalactitol oder 2,4:3,5-Di-O-methylen-D-mannitol abgeleitet ist.

11. Polyester-Copolymer **A** nach Anspruch 10, das ausgewählt ist aus:
- PEITF, das ein Polyester-Copolymer ist, das aus PET hergestellt ist, zu 10 bis 60 Mol-% Isosorbid und zu 10 bis 60 Mol-% Furandicarbonsäure, und vorzugsweise ein PEITF-Polyester-Copolymer, das aus PET mit einer Menge an Isosorbid von mehr als 5 Mol-% und gleich der Menge an Furandicarbonsäure hergestellt ist;
- PEIFT, das ein Polyester-Copolymer ist, das aus PEF hergestellt ist, zu 10 bis 60 Mol-% Isosorbid und zu 10 bis 60 Mol-% Terephthalsäure; und vorzugsweise ein PEIFT-Polyester-Copolymer, das aus PEF mit einer Menge an Isosorbid von mehr als 5 Mol-% und gleich der Menge an Terephthalsäure hergestellt ist;
und vorzugsweise PEITF50, das ein Polyester-Copolymer ist, das aus PET mit 50 Mol-% Isosorbid und Furandicarbonsäure hergestellt ist, was dasselbe wie PEIFT50 ist, das ein Polyester-Copolymer ist, das aus PEF mit 50 Mol-% Isosorbid und Terephthalsäure hergestellt ist, von denen PEITF50 mehr bevorzugt ist;
wobei die Mol.-% auf der Basis von der Gesamtmenge an Diol beziehungsweise Dicarbonsäure ist.

12. Zusammensetzung, umfassend das Polyester-Copolymer **A** nach Anspruch 10 und zusätzlich ein oder mehrere Zusätze und/oder ein oder mehrere zusätzliche andere (Co-)Polymere.

13. Erzeugnis, umfassend das Polyester-Copolymer **A** nach Anspruch 10 oder Zusammensetzung, umfassend ein Polyester-Copolymer **A** nach Anspruch 11 und ein oder mehrere Zusätze und/oder zusätzliche Polymere.

## Revendications

1. Procédé de polymérisation destiné à la production d'un copolymère de polyester **A** comprenant la mise en réaction simultanée d'un polyester (i) avec un ou plusieurs diols (ii) et un ou plusieurs acides dicarboxyliques (hétéro)aromatiques ou de quelconques esters de ceux-ci (iii),
dans lequel le polyester (i) est téréphtalate de polyéthylène, furanoate de polyéthylène ou teréphtalate-co-furanoate de polyéthylène ; et
dans lequel aucun éthylène glycol n'est ajouté en tant que diol (ii) ; et
dans lequel au moins l'un parmi le ou les diols (ii) est de l'isosorbide ; et
dans lequel le ou les acides dicarboxyliques (hétéro)aromatiques ou de quelconques esters de ceux-ci (iii) est/sont chacun individuellement choisis parmi acide téréphtalique, un monoester d'acide téréphtalique, un diester d'acide téréphtalique, un acide furandicarboxylique, un monoester d'acide furandicarboxylique et un diester d'acide furandicarboxylique ; et
dans lequel les composants (i) et (ii) sont utilisés en des quantités suffisantes pour produire un copolymère de polyester **A** comprenant au moins 40 % molaires d'éthylène glycol dérivé du téréphtalate de polyéthylène, furanoate de polyéthylène ou teréphtalate-co-furanoate de polyéthylène de départ et au moins 5 % molaires, de préférence une valeur égale ou supérieure à 10 % molaires, de monomères dérivés d'isosorbide, les pourcentages étant en fonction de la quantité totale de motifs monomères dérivés de diol dans le copolymère de polyester **A ;**
et dans lequel le procédé comprend le chauffage du mélange de polyester (i), du ou des diols (ii) et du ou des acides dicarboxyliques (hétéro)aromatiques ou de quelconques esters de ceux-ci (iii) pour former une masse fondue, comprenant les étapes (a) à (d) :
(a) dans une cuve à réaction, le chauffage du polyester (i), du ou des diols (ii) et du ou des acides dicarboxyliques (hétéro)aromatiques ou de quelconques esters de ceux-ci (iii) à une certaine température suffisamment élevée pour former une bouillie/masse fondue, de sorte que le mélange réactionnel a une température allant d'au moins 220 °C à 260 °C, pendant un certain laps de temps jusqu'à ce qu'une masse fondue limpide se forme, allant spécifiquement 120 à 250 minutes, à une pression de 1 à 5 bar ;
(b) la poursuite de la réaction d'estérification/transestérification pendant un laps de temps de 60 à 100 minutes tout en augmentant progressivement la température du mélange réactionnel à une température n'excédant pas 270 °C et en réduisant progressivement la pression à la pression atmosphérique ;
(c) tout en démarrant à la même température que la température de l'étape (b), le traitement du produit résultant de l'étape (b) avec une pression inférieure à 20 mbar, de préférence inférieure à 10 mbar, et plus préférablement inférieure à 5 mbar sous agitation poursuivie pendant 60 à 240 minutes ; et facultativement à la fin de l'étape (c), afin de décharger facilement le polyester, l'augmentation encore de la température de 0,1 °C à 50 °C jusqu'à une température n'excédant pas 285 °C ; et (d) décharger le polyester à une pression de 1 à 5 bar ; et
pour générer un polyester **A** comprenant des motifs monomères dérivés du polyester (i), du ou des diols (ii) et du ou des acides dicarboxyliques (hétéro)aromatiques ou de quelconques esters de ceux-ci (iii), ayant une masse moléculaire moyenne en nombre, telle que mesurée par chromatographie par perméation sur gel avec des étalons PMMA en guise de matériau de référence, de 16 500 Daltons ou plus, et ayant un indice de polydispersité dans la plage allant d'une valeur égale ou supérieure à 1,6 à égale ou inférieure à 2,6 et ayant une température de transition vitreuse, telle que déterminée à l'aide d'une calorimétrie différentielle à balayage, dans la plage allant d'une valeur égale ou supérieure à 60 °C à inférieure à 160 °C.

2. Procédé selon la revendication 1, dans lequel le copolymère de polyester **A** généré par le procédé comprend des motifs monomères dérivés d'isosorbide à au moins 10 % molaires, de préférence 20 à 30 % molaires, de manière appropriée 30 à 40 % molaires, jusqu'à 60 % molaires, le pourcentage étant en fonction de la quantité totale de motifs monomères dérivés de diol dans le copolymère de polyester **A.**

3. Procédé selon l'une quelconque des revendications 1 à 2, dans lequel, en plus de l'isosorbide, un diol supplémentaire (ii) est choisi parmi 1,2-propanediol, 2,3-butanediol, néopentylglycol, cyclohexanediméthanol, 2,3:4,5-di-O-méthylène-galactitol et 2,4:3,5-di-O-méthylène-D-mannitol.

4. Procédé selon la revendication 3, dans lequel, en plus de l'isosorbide, du cyclohexanediméthanol est utilisé en tant que diol supplémentaire (ii).

5. Procédé selon la revendication 1, dans lequel le ou les diols (ii) et le ou les acides dicarboxyliques (hétéro)aromatiques ou de quelconques esters de ceux-ci (iii) sont utilisés dans le procédé dans un rapport molaire de la somme totale des diols à la somme totale des acides dicarboxyliques ou de quelconques esters de ceux-ci de 1,5: 1,0 à 1,0: 1,0.

6. Procédé selon la revendication 5, dans lequel le ou les acides dicarboxyliques (hétéro)aromatiques ou de quelconques esters de ceux-ci (iii) sont de l'acide téréphtalique et/ou de l'acide furandicarboxylique.

7. Procédé selon l'une quelconque des revendications 1 à 6, dans lequel en plus du polyester (i), du ou des diols (ii) et du ou des acides dicarboxyliques (hétéro)aromatiques ou de quelconques esters de ceux-ci (iii) un alcool monohydrique dans lequel le groupe hydroxy est le seul groupe fonctionnel réactif, est également ajouté à 10 à 100 % en poids par rapport au poids total des autres réactifs (i), (ii) et (iii), dans lequel l'alcool monohydrique a un point d'ébullition égal ou supérieur à 175 °C et une constante de dissociation d'acide (pKa) égale ou inférieure à 12,0 et égale ou supérieure à 7,0.

8. Procédé selon l'une quelconque des revendications 1 à 7, dans lequel les composants (i) et (ii) sont utilisés en des quantités suffisantes pour produire un copolymère de polyester **A** comprenant 10 à 60 % molaires, de monomères dérivés d'isosorbide, les pourcentages étant en fonction de la quantité totale de motifs monomères dérivés de diol dans le copolymère de polyester ; et
pour générer un polyester **A** ayant une température de transition vitreuse, telle que déterminée à l'aide d'une calorimétrie différentielle à balayage, dans la plage allant d'une valeur égale ou supérieure à 80 °C à inférieure à 160 °C.

9. Procédé selon l'une quelconque des revendications 1 à 8, pour générer un polyester **A** ayant une température de transition vitreuse, telle que déterminée à l'aide d'une calorimétrie différentielle à balayage, dans la plage allant d'une valeur égale ou supérieure à 100 °C à inférieure à 160 °C.

10. Copolymère de polyester **A** pouvant être obtenu par un procédé selon l'une quelconque des revendications 1 à 9, en particulier choisi parmi un copolymère de polyester, comprenant des motifs monomères dérivés d'acide dicarboxylique (hétéro)aromatique et des motifs monomères dérivés de diol dans un rapport 1: 1, ayant une masse moléculaire moyenne en nombre, telle que mesurée par chromatographie par perméation sur gel avec des étalons PMMA en guise de matériau de référence, de 16 500 Daltons ou plus, et ayant un indice de polydispersité dans la plage allant d'une valeur égale ou supérieure à 1,6 à égale ou inférieure à 2,6, et ayant une température de transition vitreuse, telle que déterminée à l'aide d'une calorimétrie différentielle à balayage, égale ou supérieure à 60 °C jusqu'à 160 °C contenant :
(a) dans la plage allant d'une valeur égale ou supérieure à 5 % molaires, de préférence égale ou supérieure à 10 % molaires à une valeur égale ou inférieure à 60 % molaires, en fonction de la quantité totale de motifs monomères dérivés de diol au sein du copolymère de polyester, de motifs monomères isosorbide ;
(b) dans la plage allant d'une valeur égale ou supérieure à 40 % molaires à une valeur égale ou inférieure à 90 % molaires, en fonction de la quantité totale de motifs monomères dérivés de diol au sein du copolymère de polyester, d'un motif monomère dérivé d'éthylène glycol ;
(c) facultativement jusqu'à 5 % molaires, en fonction de la quantité totale de motifs monomères dérivés de diol au sein du copolymère de polyester, d'un motif monomère dérivé de diéthylène glycol ;
et soit (d1) soit (d2) :
(d1) d'une valeur égale ou supérieure à 40 % molaires à 90 % molaires en fonction de la quantité totale de motifs monomères dérivés d'acide dicarboxylique (hétéro)aromatique, d'un motif monomère dérivé d'acide téréphtalique, le reste des motifs monomères dérivés d'acide dicarboxylique (hétéro)aromatique étant un motif monomère dérivé d'acide furandicarboxylique ; ou
(d2) d'une valeur égale ou supérieure à 40 % molaires à 90 % molaires en fonction de la quantité totale de motifs monomères dérivés d'acide dicarboxylique (hétéro)aromatique, d'un motif monomère dérivé d'acide furandicarboxylique, le reste des motifs monomères dérivés d'acide dicarboxylique (hétéro)aromatique étant un motif monomère dérivé d'acide téréphtalique ; et
(e) facultativement jusqu'à 5 % molaires, en fonction de la quantité totale de motifs monomères dérivés d'acide dicarboxylique (hétéro)aromatique, d'un motif monomère dérivé d'acide isophtalique ; et (f) facultativement d'une valeur égale ou supérieure à 0 % molaire à une valeur égale ou inférieure à 20 % molaires, en fonction de la quantité totale de motifs monomères dérivés de diol, d'un motif monomère dérivé de 1,2-propane-diol, de 2,3-butane-diol, de néopentylglycol, de cyclohexanediméthanol, de 2,3:4,5-di-O-méthylène-galactitol ou de 2,4:3,5-di-O-méthylène-D-mannitol.

11. Copolymères de polyester **A** selon la revendication 10, choisis parmi :
- du PEITF, qui est un copolymère de polyester préparé à partir de PET, de 10 à 60 % molaires d'isosorbide et de 10 à 60 % molaires d'acide furandicarboxylique, et de préférence un copolymère de polyester PEITF préparé à partir de PET avec une quantité d'isosorbide supérieure à 5 % molaires et égale à la quantité d'acide furandicarboxylique ;
- du PEIFT, qui est un copolymère de polyester préparé à partir de PEF, de 10 à 60 % molaires d'isosorbide et de 10 à 60 % molaires d'acide téréphtalique ; et de préférence un copolymère de polyester PEIFT préparé à partir de PEF avec une quantité d'isosorbide supérieure à 5 % molaires et égale à la quantité d'acide téréphtalique ;
et de préférence du PEITF50, qui est un copolymère de polyester préparé à partir de PET avec 50 % molaires d'isosorbide et d'acide furandicarboxylique, qui est le même que PEIFT50 qui est un copolymère de polyester préparé à partir de PEF avec 50 % molaires d'isosorbide et d'acide téréphtalique, desquels PEITF50 est davantage préféré ;
dans lequel le % molaire est en fonction du total du diol et de l'acide dicarboxylique, respectivement.

12. Composition comprenant le copolymère de polyester **A** selon la revendication 10, avec en plus un ou plusieurs additifs et/ou un ou plusieurs autres (co)polymères supplémentaires.

13. Article comprenant le copolymère de polyester **A** selon la revendication 10 ou une composition comprenant un copolymère de polyester **A** selon la revendication 11 et un ou plusieurs additifs et/ou polymères supplémentaires.
